# EUROPÄISCHE PATENTSCHRIFT

(11) **EP 2 448 776 B1**
(45) Veröffentlichungstag und Bekanntmachung des Hinweises auf die Patenterteilung: **03.04.2013**
(21) Anmeldenummer: 10723584.8
(22) Anmeldetag: 04.06.2010
(51) Int. Cl.: B60C 11/03, B60C 11/13

(54) **FAHRZEUGLUFTREIFEN**
PNEUMATIC TIRE FOR VEHICLE
PNEUMATIQUES POUR VÉHICULE

(30) Priorität: 01.07.2009 DE 102009026086
(43) Veröffentlichungstag der Anmeldung: 09.05.2012
(73) Patentinhaber: Continental Reifen Deutschland GmbH, 30165 Hannover (DE)
(72) Erfinder: BEHR, Ulrich, 30169 Hannover (DE); FISCHER, Markus, 30823 Garbsen (DE)
(74) Vertreter: Finger, Karsten
(86) Internationale Anmeldenummer: PCT/EP2010/057810
(87) Internationale Veröffentlichungsnummer: WO 2011/000661

(56) Entgegenhaltungen:
- EP-A2- 0 841 199
- WO-A1-98/31555
- JP-A- 5 178 031
- US-A1- 2008 053 585

## Beschreibung

Die Erfmdung betrifft einen Fahrzeugluftreifen -insbesondere für Personenkraftwagen - mit Laufstreifenprofil mit radial erhabenen über den Umfang des Fahrzeugluftreifens erstreckten Profilbänder - wie z.B. Profilblockreihen oder Umfangsrippen - die in axialer Richtung jeweils durch eine über den Umfang des Fahrzeugluftreifens erstreckte Umfangsrille voneinander beabstandet sind, bei dem wenigstens eine Profilblockreihe der in axialer Richtung A innerhalb der Bodenaufstandsbreite gemessenen Breite b aus in Umfangsrichtung U des Fahrzeugluftreifens hintereinander angeordneten und jeweils durch eine Querrille von einander beabstandeten Profilblockelementen ausgebildet ist.

Derartige Fahrzeugluftreifen sind bekannt. Dabei ermöglichen die Querrillen die Aufnahme und die Ableitung von Wasser beim Durchlaufen des Reifenlatsches auf nassen Straßenoberflächen. Die durch die Querrillen gebildeten in Umfangsrichtung gerichteten Profilblockelementflanken ermöglichen Griffkanten zur Verbesserung der Traktion und Bremseigenschaften. Die Querrillen reduzieren jedoch die Umfangssteifigkeit und die Quersteifigkeit der Profilblockreihen, wodurch die Profilblockelemente sich aufgrund ihrer gerade beim Neureifen mit großer Profiltiefe erhöhten Flexibilität mehr oder weniger stark verbiegen und verwinden können, wodurch die Kraftübertragung sowohl auf trockener als auch auf nasser Straße beeinträchtigt wird.

Es ist bekannt, zur Erhöhung der Umfangssteifigkeit der Profilblockelemente zwei in Umfangsrichtung hintereinander angeordnete Profilblockelemente durch einen aus dem Rillengrund radial erhabenen Steg miteinander zu verbinden. Die Stege sind dabei üblicherweise im Bereich der Querrillenmitte angeordnet. Diese Versteifung bewirkt eine erhöhte Umfangssteifigkeit der Profilblockreihe, wodurch die durch die Querrille gebildeten Profilblockelementflanken einen verbesserten Griff zur Übertragung von Kräften in Umfangsrichtung ermöglichen. Hierdurch können die Nassgriffeigenschaften verbessert werden.

Allerdings sind die Profilblockelemente durch den Steg fast punktförmig miteinander verbunden und über die breiten axialen Erstreckungsbereiche außerhalb des Steges bis zu den die Profilblockreihen jeweils begrenzenden Umfangsrillen unversteift und flexibel. Hierdurch sind die Profilblockelemente an beiden axialen Erstreckungsenden auch bei diesen Ausbildungen weiterhin aufgrund der hohen Flexibilität verbiegbar und sowohl um radiale als auch um in Umfangsrichtung gerichtete Achsen verwindbar. Dies bewirkt, dass beim Bremsen auf trockener Straße die Profilblockelemente in weiten Erstreckungsbereichen axial außerhalb des Steges aufgrund von auftretenden Verwölbungen der Straßenkontaktoberfläche des Profilblockelementes hinsichtlich des für Trockenbremseigenschaften wichtigen großflächigen gleichmäßigen Bodenkontaktes unerwünscht eingeschränkt werden kann. Darüber hinaus können auch die zu den benachbarten Umfangsrillen ausgebildeten Profilblockelementflanken weiterhin unerwünscht stark verformt werden, so dass die zum Handling gewünschte zwischen der in der Umfangsrille gebildeten Profilblockelementflanke und der radial äußeren das Profilblockelement begrenzende Oberfläche gebildete Kante in ihrer Griffwirkung beeinträchtigt werden kann, wodurch die Handlingseigenschaften reduziert werden können. Darüber hinaus ist die zwischen Querrille und Umfangsrille gebildete Ecke des Profilblockelementes durch Torsions- und Biegebewegung in ihrer Griffwirkung beeinträchtigt, wodurch die für gute Handlingeigenschaften besonders wichtige zwischen Umfangsrille und Querrille eingeschlossene Ecke ihre Griffwirkung nicht vollständig entfaltet. Das Trockenhandling wird hierdurch weiter zusätzlich beeinträchtigt.

Aus der EP 0 654 366 B1 st es bekannt, in den Querrillen einer Profilblockreihe jeweils einen Steg auszubilden, der an einem axialen Erstreckungsende der Querrille ausgebildet ist. Die Profilblockelemente sind hierdurch praktisch über die gesamte Querrille hinweg nicht gestützt und sind hierdurch noch anfälliger für Verwindungen und Verbiegungen. Dabei ist aus der EP 0 654 366 B1 eine Ausführung bekannt, bei der die Stege jeweils an der gleichen axialen Position der Querrillen einer Profilblockreihe ausgebildet sind. Die Profilblockelemente sind in diesem Fall über ihre gesamte axiale Erstreckung, ausgehend von der axialen Position des Steges wie mit einem Hebelarm, der der gesamten Erstreckungslänge der Querrille entspricht, um eine radiale Achse durch den Befestigungspunkt am Steg tordierbar und nahezu über ihre gesamte axiale Erstreckung auch um Achsen parallel zur Reifenachse verwindbar. Die hierdurch bedingten gegenüber der Ausbildung der Stege in mittlerer Position größere Verwindbarkeit und Verbiegbarkeit der Profilblockelemente können zu erhöhter Beschränkung der Handling- und Trockenbremseigenschaften führten. Aus der EP 0 654 366 B1 ist darüber hinaus eine Ausbildung bekannt, bei der über den Umfang des Reifens in alternierender Reihenfolge ein Steg in einer ersten Querrille auf der linken Seite der Querrille und der Steg in der nächsten Querrille auf der rechten Seite der Querrille angeordnet ist. Auch hier ist eine große Verwindbarkeit der Profilblockelemente um radiale und um axiale Achsen sowie um Umfangsachsen parallel zur Umfangsrichtung gegeben, wodurch sowohl TrockenBremseigenschaften als auch Handling-Eigenschaften unerwünscht beeinträchtigt werden können. Darüber hinaus ist bei dieser Ausbildung zusätzlich die Umfangssteifigkeit durch die alternierende Positionierung reduziert.

**Aus der** WO 98/31555 A1 **ist ein Fahrzeugluftreifen gemäß den Merkmalen des Oberbegriffs bekannt.**

Der Erfindung liegt die Aufgabe zugrunde, in einfacher Weise bei einem derartigen Fahrzeugluftreifen verbesserten Handling- und Trockenbremseigenschaften zu ermöglichen.

Die Aufgabe wird erfindungsgemäß durch Ausbildung eines Fahrzeugluftreifen - insbesondere für Personenkraftwagen - mit Laufstreifenprofil mit radial erhabenen über den Umfang des Fahrzeugluftreifens erstreckten Profilbändern - wie z.B. Profilblockreihen oder Umfangsrippen - die in axialer Richtung jeweils durch eine über den Umfang des Fahrzeugluftreifens erstreckte Umfangsrille voneinander beabstandet sind, bei dem wenigstens eine Profilblockreihe der in axialer Richtung A innerhalb der Bodenaufstandsbreite gemessenen Breite b aus in Umfangsrichtung U des Fahrzeugluftreifens hintereinander angeordneten und jeweils durch eine Querrille von einander beabstandeten Profilblockelementen ausgebildet ist, wobei in jeder Querrille **der Profilblockreihe innerhalb der Erstreckungsbreite b der Profilblockreihe jeweils in den beiden axial äußerer Randbereichen der Querrille der axialen Erstreckungslänge a mit a ≤ (b/4) - gemessen jeweils vom axialen Erstreckungsende der Profilblockreihe - innerhalb der Bodenaufstandsbreite ein in radialer Richtung R bis in einen radialen Abstand h₂ > 0 von der die Bodenkontaktoberfläche bildenden Mantelfläche des Laufstreifenprofiles erstreckter aus dem Rillengrund der Querrille erhabener Steg ausgebildet ist, der sich in Umfangsrichtung U erstreckt und die beiden durch die Querrille von einander beabstandeten Profilblockelemente mit einander verbindet,** gemäß den Merkmalen von Anspruch 1 gelöst.

Durch diese Ausbildung wird die Profilblockreihe in jeder Querrille an beiden axialen Enden der Querrille in Umfangsrichtung versteift, wodurch eine hohe Umfangssteifigkeit zur Erzielung guter Nassgriffeigenschaften ermöglicht wird. Die Versteifung mit den beiden Stegen jeweils im axialen Endbereich der Querrille bewirkt eine Versteifung sowohl in Umfangsrichtung als auch eine Versteifung gegen Verwindung des Profilblockelementes um eine radiale Achse durch das Profilblockelement und gegen eine Verbiegung um Parallelen zur Umfangsrichtung auch in beiden axialen Endbereichen des Profilblockelementes. Die Ausbildung in allen Querrillen der Profilblockelemente bewirkt darüber hinaus eine Versteifung gegen Verbiegung um Parallelen zur Reifenachse durch das jeweilige Profilblockelement, wodurch über die gesamte axiale Erstreckung der Profilblockreihe - auch bei Neureifen - die zwischen der in Umfangsrichtung das Profilelement begrenzenden Profilblockelementflanke und der radial äußeren Oberfläche des Profilblockelementes gebildete Griffkante sicheren Griff ermöglicht, wodurch die Nassgriffeigenschaft für gute Traktion und Bremsen gesichert werden. Die radial äußere die Bodenkontaktoberfläche-bildende Mantelfläche bleibt über ihre gesamte Erstreckung in vergleichmäßigtem Bodenkontakt zur Straßenoberfläche auch bei Traktions- und Bremsbewegungen, wodurch gute Bremseigenschaften auf trockener Fahrbahn sowie gute Trocken-Traktions- und Handlingseigenschaften verbessert werden. Die zwischen der von der benachbarten Umfangsrille gebildeten Rillenwand und der Profilblockelementmantelfläche gebildete Kante ist ebenfalls gegen Verbiegen gesichert, wodurch die Handlingeigenschaften zusätzlich verbessert werden. Die für das Handling wichtige von der axial das Profilblockelement begrenzenden Rillenwand der Umfangsrille und von der in Umfangsrichtung das Profilblockelement begrenzenden Rillenwand der Querrille eingeschlossene Profilblockelementecke ist ebenfalls jeweils gegen Verwindung gesichert, wodurch sie ihre volle für das Handling wichtige Grifiwirkung entfalten kann.

**Durch die Ausbildung des einen Steges der Querrille mit einer in Erstreckungsrichtung der Querrille gemessenen Breite e₁ mit 1mm≤e₁≤4mm und des anderen Steges mit einer in Erstreckungsrichtung der Querrille gemessenen Breite e₂ mit 1mm≤ e₂≤4mm ausgebildet ist mit e₁<e₂, wobei die Breite jeweils in Position der radial äußeren Mantelfläche des Steges gemessen wird, wird in einfacher Weise die Erzielung eines optimierten Verhältnisses aus Flexibilität und Steifigkeit bei sicherer Anbindung der von den Querrillen und Umfangsrillen eingeschlossenen Ecken von Profilblockelementen ermöglicht. Die hierdurch bedingte asymmetrische Anbindung ermöglicht in einfacher Weise eine Anpassung der individuell jeweils benötigten Steifigkeit bei asymmetrischen Profilstrukturen.**

Besonders vorteilhaft ist die Ausbildung eines Fahrzeugluftreifens gemäß den Merkmalen von Anspruch 2, wobei die Querrille in axialer Richtung durch eine Knickstelle ihres Verlaufes in zwei geradlinig verlaufende Erstreckungsabschnitte aufgeteilt ist, wobei die Knickstelle zwischen den beiden Stegen der Querrille ausgebildet ist. Die von Quer- und Umfangsrille eingeschlossenen Ecken der Profilblockelemente werden in beiden Erstreckungsbereichen stabilisiert. Somit wird ein Einrollen auch spitzer Ecken bei Belastung verhindert, wodurch Abrieb und Performance des Reifens verbessert werden können.

Besonders vorteilhaft ist die Ausbildung eines Fahrzeugluftreifens gemäß den Merkmalen von Anspruch 3, wobei die Breite b der Profilblockreihe mit 20mm ≤ b ≤ 35mm ausgebildet ist. Diese Ausbildung ermöglicht eine Optimierung der Lösung Zielkonfliktes aus Handling auf trockener Straße und Nässeeigenschaften des Reifens. Die Profilblockreihen sind ausreichend breit zur Erzielung guter Trockenhandlingeigenschaften und ausreichend schmal für gute Nässe- bzw. Aquaplaningeigenschaften.

Besonders vorteilhaft ist die Ausbildung eines Fahrzeugluftreifens gemäß den Merkmalen von Anspruch 4, wobei die Querrillen der Profilblockreihe jeweils längs ihrer gesamte Erstreckung mit einer senkrecht zur Erstreckungsrichtung der Querrille gemessenen maximalen Breite d mit 1mm≤ d ≤3mm - gemessen in der die Straßenkontaktfläche bildenden Mantelfäche - ausgebildet ist. Die Ausbildung ermöglicht ein optimales Verhältnis zwischen Flexibilität und Profilnegativanteil in Querrichtung (Quervoid). Die Ausbildung ermöglicht eine ausreichende Flexibilität zur Erreichung eines guten Footprintoberfläche und für gute Trockeneigenschaften bei minimierter Geräuschbildung.

Besonders vorteilhaft zur Erzielung eines optimierten Verhältnisses aus Längssteifigkeit der Profilblockreihe und Fexibilität ist die Ausbildung eines Fahrzeugluftreifens gemäß den Merkmalen von Anspruch 5, wobei die Querrillen jeweils längs ihrer Erstreckung zwischen den beiden Stegen mit einer Tiefe t₁ mit 4mm≤ t₁ ≤ 8mm ausgebildet ist, wobei die Tiefe t₁ jeweils die maximale in radialer Richtung R von der die Bodenkontaktoberfläche bildenden Mantelfläche bis zum Rillengrund gemessene Erstreckung angibt.

Besonders vorteilhaft ist die Ausbildung eines Fahrzeugluftreifens gemäß den Merkmalen von Anspruch 6, wobei die Querrillen jeweils längs ihrer Erstreckung außerhalb der beiden Stegen mit einer Tiefe t₂ mit 6mm≤ t₂≤ 8mm ausgebildet ist, wobei die Tiefe t₂ jeweils die maximale in radialer Richtung R von der die Bodenkontaktoberfläche bildenden Mantelfläche bis zum Rillengrund gemessene Erstreckung angibt, wobei insbesondere die Tiefe t₂ der maximalen Tiefe einer die Profilblockreihe in axialer Richtung A begrenzenden Umfangsrille entspricht.

Besonders vorteilhaft ist die Ausbildung eines Fahrzeugluftreifens gemäß den Merkmalen von Anspruch 7, wobei der radiale Abstand h₂ mit 1mm≤ h2≤3mm ausgebildet ist. Hierdurch wird in einfacher Weise eine maximale wirkende Querkantenlänge im Bereich der Profilblockreihe bei Neureifen bei hoher Versteifungswirkung ermöglicht.

Besonders vorteilhaft ist die Ausbildung eines Fahrzeugluftreifens gemäß den Merkmalen von Anspruch 8, wobei sich der Steg jeweils aus dem tiefsten Punkt des Rillengrundes des zwischen den beiden Stegen ausgebildeten Rillenabschnitts gesehen in radialer Richtung R bis in eine Höhe h₁ erstreckt mit 2mm≤ h₁≤7mm. Hierdurch wird in einfacher Weise eine maximale wirkende Querkantenlänge im Bereich der Profilblockreihe bei Neureifen bei hoher Versteifungswirkung ermöglicht.

Besonders vorteilhaft ist die Ausbildung eines Fahrzeugluftreifens gemäß den Merkmalen von Anspruch 9, wobei der eine Steg der Querrille mit einem in Erstreckungsrichtung der Querrille gemessenen Abstand f₁ mit f₁≥0mm vom innerhalb der Bodenaufstandsbreite nächstgelegenen axialen Erstreckungsende der Profilblockreihe und der zweite Steg mit einem in Erstreckungsrichtung der Querrille gemessenen Abstand f₂ mit f₂≥0mm vom innerhalb der Bodenaufstandsbreite nächstgelegenen axialen Erstreckungsende der Profilblockreihe angeordnet ausgebildet ist. Hierdurch kann eine große wirkende Kantenlänge der Querkanten auch über die Lebensdauer des Laufstreifenprofiles sichergestellt werden.

Besonders vorteilhaft ist die Ausbildung eines Fahrzeugluftreifens gemäß den Merkmalen von Anspruch 10 mit f₁ < f₂. Die hierdurch bedingte asymmetrische Anbindung ermöglicht in einfacher Weise eine Anpassung der individuell jeweils benötigten Steifigkeit bei asymmetrischen Profilstrukturen.

Die Erfindung ist im Folgenden an Hand der in den Figuren 1 bis 3 dargestellten Ausführungsbeispiele am Beispiel eines PKW-Sommerreifens radialer Bauart näher erläutert. Darin zeigen
- Fig. 1: einen Umfangsabschnitt eines Laufstreifenprofils eines Fahrzeugluftreifens für Personenkraftwagen mit Sommerreifenprofil,
- Fig. 2: den Querschnitt durch eine Profilblockelementreihe von Fig. 1 gemäß Schnittdarstellung II-II von Fig. 1 und
- Fig. 3: eine Seitenansicht der Profilblockreihe von Fig. 1 gemäß Schnitt III-III von Fig.1.

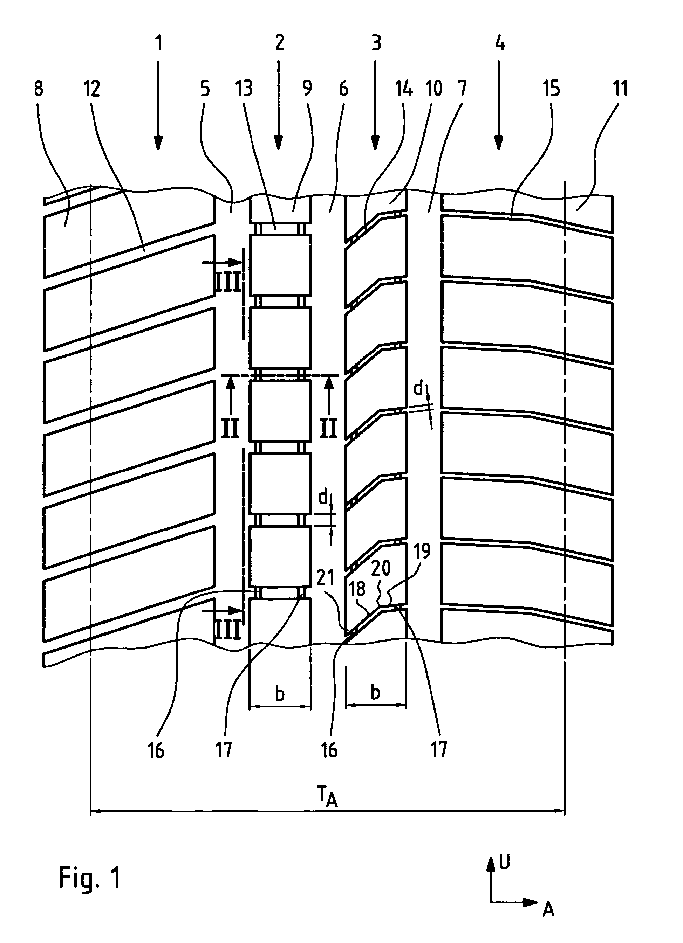

Die Fig. 1 bis Fig. 3 zeigen ein Laufstreifenprofil eines Fahrzeugluftreifes für Personenkraftwagen in radialer Bauart. Das Laufstreifenprofil ist ein Sommerreifenprofil.

Das Laufstreifenprofil ist - in Fig. 1 von links nach rechts dargestellt - mit in axialer Richtung A nebeneinander angeordneten Profilblockreihen 1, 2, 3 und 4 ausgebildet. Die Profilblockreihen 1 und 4 sind Schulterprofilblockreihen. Die Profilblockreihen 1 bis 4 erstrecken sich jeweils über den gesamten Umfang des Fahrzeugluftreifens in Umfangsrichtung U des Fahrzeugluftreifens. Die Profilblockreihen 1 und 2 sind in axialer Richtung A durch eine in Umfangsrichtung U ausgerichtete und über den gesamten Umfang erstreckte Umfangsrille 5 bekannter Art voneinander voneinander beabstandet ausgebildet. Die Profilblockreihe 2 und die Profilblockreihe 3 sind in axialer Richtung A durch eine in Umfangsrichtung U ausgerichtete und über den gesamten Umfang erstreckte Umfangsrille 6 bekannter Art voneinander voneinander beabstandet ausgebildet. Die Profilblockreihen 3 und 4 sind in axialer Richtung A durch eine über den gesamten Umfang des Fahrzeugluftreifens erstreckte und in Umfangsrichtung U ausgerichtete Umfangsrille 7 bekannter Art voneinander beabstandet ausgebildet. Die Profilblockreihe 1 ist in bekannter Weise aus in Umfangsrichtung U hintereinander angeordneten über den gesamten Umfang verteilten und in Umfangsrichtung U jeweils durch eine Querrille 12 voneinander beabstandeten Profilblockelementen 8 ausgebildet. Die Profilblockreihe 2 ist in bekannter Weise aus in Umfangsrichtung U hintereinander angeordneten über den gesamten Umfang verteilten und in Umfangsrichtung U jeweils durch eine Querrille 13 voneinander beabstandeten Profilblockelementen 9 ausgebildet. Die Profilblockreihe 3 ist in bekannter Weise aus in Umfangsrichtung U hintereinander angeordneten über den gesamten Umfang verteilten und in Umfangsrichtung U jeweils durch eine Querrille 14 voneinander beabstandeten Profilblockelementen 10 ausgebildet. Die Profilblockreihe 4 ist in bekannter Weise aus in Umfangsrichtung U hintereinander angeordneten über den gesamten Umfang verteilten und in Umfangsrichtung U jeweils durch eine Querrille 15 voneinander beabstandeten Profilblockelementen 11 ausgebildet.

Die Querrillen 12 der Schulterprofilblockreihe 1 erstrecken sich in axialer Richtung A des Fahrzeugluftreifens innerhalb der Breite T_{A} der Bodenaufstandsfläche des Fahrzeugluftreifens ausgehend von der Umfangsrille 5 über die gesamte Profilblockreihe 1 bis in eine Position außerhalb der Bodenaufstandsfläche T_{A}. Ebenso erstrecken sich die Querrillen 15 der Schulterprofilblockreihe 4 in axialer Richtung A des Fahrzeugluftreifens innerhalb der Breite T_{A} der Bodenaufstandsfläche des Fahrzeugluftreifens ausgehend von der Umfangsrille 7 über die gesamte Profilblockreihe 4 bis in eine Position außerhalb der Bodenaufstandsfläche T_{A}.

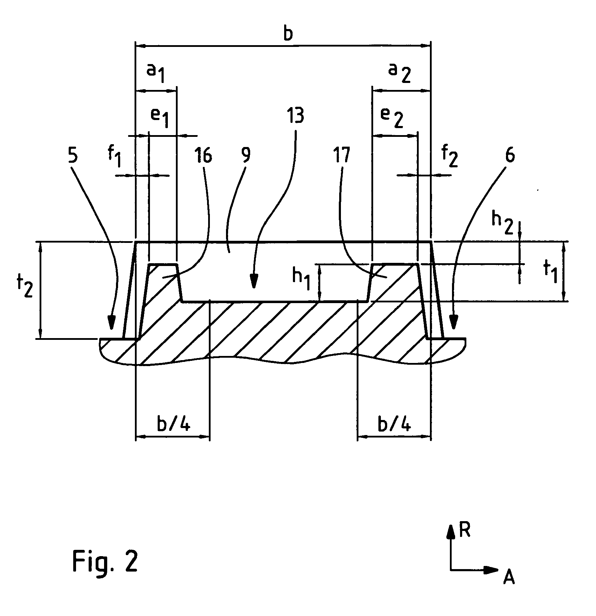

Die Querrillen 13 erstrecken sich ausgehend von der Umfangsrille 5 über die gesamte axiale Breite b der Profilblockreihe 2 bis in die Umfangsrille 6. Die Querrillen 14 erstrecken sich ausgehend von der Umfangsrille 6 über die gesamte axiale Breite b der Profilblockreihe 3 bis in die Umfangsrille 7. Wie in Fig. 2 dargestellt ist, bemisst sich die axiale Breite b in der radial äußeren, die Straßenkontaktoberfläche bildenden und das Profilblockelement 9 nach radial außen begrenzenden Mantelfläche.

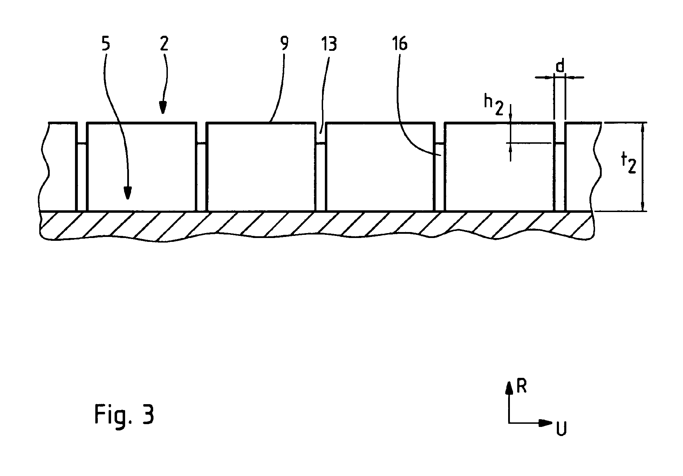

Die Umfangsrillen 5, 6 und 7 sind - wie in Fig. 2 und Fig. 3 dargestellt - mit einer ausgehend von der die Straßenkontaktoberfläche bildenden radial äußeren Mantelfläche des Profils bis zum jeweils tiefsten Punkt des Rillengrundes gebildeten in radialer Richtung R gemessenen Tiefe t₂ ausgebildet, wobei die Rillentiefe t₂ am Neureifen mit 6mm ≤ t₂ ≤ 8mm ausgebildet ist.

In den beiden Profilblockreihen 2 und 3 sind jeweils in den Querrillen 13 bzw. 14 zwei aus dem Rillengrund der jeweiligen Querrille 13 bzw. 14 radial erhabene Stege 16 und 17 beabstandet zueinander ausgebildet, wobei die Stege 16 und 17 jeweils in Umfangsrichtung U des Fahrzeugluftreifens über die gesamte jeweilige Breite der Querrille 13 bzw. 14 erstreckt ausgebildet sind. Die Stege 16 und 17 einer Querrille 13 verbinden dabei in der Profilblockreihe 2 jeweils die durch die Querrille 13 voneinander beabstandeten hintereinander angeordneten Profilblockelementen 9 miteinander. Die Stege 16 und 17 einer Querrille 14 verbinden dabei in der Profilblockreihe 3 jeweils die durch die Querrille 14 voneinander beabstandeten hintereinander angeordneten Profilblockelementen 10 miteinander.

Die Ausbildungen der Stege 16 und 17 sowie der Querrillen 13 bzw. 14 werden im Folgenden zur Vereinfachung lediglich anhand der Profilblockreihe 2 und den Querrillen 13 erläutert. Die Ausbildung ist in analoger Weise auch in der Profilblockreihe 3 in den Querrillen 14 und den dort ausgebildeten Stegen 16 und 17 ausgeführt.

Wie in Figur 2 zu erkennen ist, ist der Steg 16 in einem axialen Erstreckungsabschnitt a₁ von der die Profilblockelemente 9 begrenzenden Umfangsrille 5 und der Steg 17 in einem axialen Erstreckungsabschnitt a₂ von der die Profilblockelemente 9 in axialer Richtung begrenzenden Umfangsrille 6 ausgebildet mit a₁ ≤ (b/4) und a₂ ≤ (b/4). Zwischen den beiden Stegen 16 und 17 ist die Querrille 13 jeweils über ihren axialen Erstreckungsverlauf mit einer Tiefe t₁ mit 4mm ≤ t₁ ≤ 8mm ausgebildet, wobei die Tiefe t₁ jeweils in den Schnittebenen senkrecht zur Erstreckungsrichtung der Querrille die maximale Erstreckung in radialer Richtung R von der die Bodenkontaktoberfläche bildenden Mantelfläche der beiden durch die Querrille 13 beabstandeten Profilblockelemente 9 bis zum radial innersten Punkt des Rillengrundes 13 darstellt. Die beiden Stege 16 und 17 erstrecken sich ausgehend vom tiefsten Punkt des Rillengrundes 13 in radialer Richtung R nach außen bis in eine Höhe h₁ mit 2mm ≤ h₁ ≤ 7 mm. Bei dem dargestellten Neureifen ist der radiale Abstand von der radial äußeren Mantelfläche des Steges 16 bzw. 17 bis zu der die Bodenkontaktoberfläche bildenden und die durch die Querrille 13 voneinander beabstandeten Profilblockelemente 9 nach radial außen begrenzenden Mantelfläche mit h₂ ausgebildet, wobei 1 mm ≤ h₂ ≤ 3 mm ist.

Die Stege 16 und 17 sind an ihrer radial äußeren Mantelfläche in den Schnittebenen, die die Reifenachse beinhalten - wie in Figur 2 dargestellt - mit geradliniger Mantelflächenschnittkontur ausgebildet.

Der Steg 16 ist an seiner radial äußeren Mantelfläche mit einem in Erstreckungsrichtung der Querrillen 13 gemessenen Abstand f₁ mit f₁ > 0 mm zur Umfangsrille 5 in radialer Position in der die Bodenkontaktoberfläche bildenden radial äußeren Mantelfläche des Reifens und der Steg 17 mit einem Abstand f₂ mit f₂ > 0 mm zur Umfangsrille 6 in der die Bodenkontaktoberfläche bildenden radial äußeren Mantelfläche des Reifens ausgebildet.

Der Steg 16 ist in seiner radial äußeren Mantelfläche mit einer in Erstreckungsrichtung der Querrille gemessenen Breite e₁ mit 1 mm ≤ e₁ ≤ 4 mm und der Steg 17 mit einer in Erstreckungsrichtung der Querrille 13 gemessenen Breite e₂ mit 1 mm ≤ e₂ ≤ 4mm ausgebildet. Die Breite e₁ bzw. e₂ wird dabei jeweils in der radialen Position der radial äußeren Mantelfläche des jeweiligen Steges 16 bzw. 17 in der Umfangsposition der Breitenmitte der Querrille am jeweiligen Steg 16 bzw. 17 gemessen.

Für e₁,f₁, a₁ und e₂,f₂,a₂ gilt (e₁ + f₁) = a₁ und (e₂ + f₂) = a₂.

Die Querrille 13 ist längs ihrer gesamten Erstreckung mit einer senkrecht zur Erstreckungsrichtung, d. h. im Ausführungsbeispiel der Profilblockreihe 2, in der die Querrille 13 mit ihrer Erstreckungsrichtung in axialer Richtung A ausgerichtet ist, mit einer in Umfangsrichtung gemessenen maximalen Breite d mit 1 mm ≤d ≤ 3 mm ausgebildet, wobei die Breite d in der radialen Position der die Straßenkontaktfläche bildenden die beiden durch die Querrille 13 voneinander beabstandeten Profilblockelemente 9 nach radial außen begrenzenden Mantelfläche gemessen ist.

In dem dargestellten Ausführungsbeispiel ist d = 1,5 mm, h₁ = 4 mm, h₂ = 2 mm und t₁ = 6 mm gewählt.

In dem dargestellten Ausführungsbeispiel ist e₁ ≠ e₂ mit e₁ < e₂ gewählt. In dem dargestellten Ausführungsbeispiel ist e₁ = 2 mm und e₂ = 3 mm ausgebildet.

In einem anderen nicht dargestellten Ausführungsbeispiel ist e₁ = e₂ gewählt.

Im dargestellten Ausführungsbeispiel ist f₁ ≠ f₂ ausgebildet. Dabei ist in der dargestellten Ausführung f₁ < f₂ gewählt.

In einem anderen nicht dargestellten Ausführungsbeispiel ist f₁ = f₂ gewählt.

Die Breite b der Profilblockelementreihen 2 und 3 ist mit 20 mm ≤ b ≤ 35 mm ausgebildet. In dargestellten Ausführungsbeispiel ist die Profilblockreihe 2 mit einer Breite b = 20 mm ausgebildet und die Profilblockreihe 3 mit einer Breite b mit b = 22 mm. In anderer nicht dargestellter Ausführung sind beide Profilblockreihen 2 und 3 mit gleich großer Breite b ausgebildet.

Die Profilblockreihe 2 ist - wie bereits dargelegt - mit Querrillen 13 ausgebildet, deren Erstreckungsrichtung über ihre gesamte Erstreckungslänge in axialer Richtung A ausgebildet ist.

Die Querrillen 14 der Profilblockreihe 3 sind längs ihrer Erstreckung von der Umfangsrille 6 zur Umfangsrille 7 ausgehend von der Umfangsrille 6 jeweils mit einem ersten Erstreckungsabschnitt 18 und einem sich anschließenden zweiten Erstreckungsabschnitt 19 ausgebildet, wobei der erste Erstreckungsabschnitt 18 geradlinig unter Einschluss eines Winkels zur axialen Richtung A von 20° bis 40° und der zweite Erstreckungsabschnitt 19 ebenfalls geradlinig unter Einschluss eines Winkels zur axialen Richtung A von 0° bis 15° ausgebildet ist, wobei zwischen erstem Erstreckungsabschnitt 18 und zweitem Erstreckungsabschnitt 19 die Querrille 14 an einer Knickstelle 20 ihren Verlauf ändert. Die Knickstelle 20 liegt im mittleren Drittel der Erstreckungsbreite b der Profilblockelementreihe 3. Die Stege 16 der Profilblockelementreihe 3 befinden sich somit im ersten Erstreckungsabschnitt 18 und die Stege 17 der Profilblockelementreihe 3 im zweiten Erstreckungsabschnitt 19 der jeweiligen Querrille 14. Zwischen Umfangsrille 6 und dem ersten Erstreckungsabschnitt 18 der Querrille 14 wird jeweils eine spitzwinklige Ecke 21 des Profilblockelementes 10 der Profilblockreihe 3 eingeschlossen, die durch den Steg 16 in Umfangsrichtung U mit dem benachbarten Profilblockelement 10 verbunden ist. Die Stege 16 der Profilblockreihe 2 sind alle in der gleichen axialen Position des Fahrzeugluftreifens ausgebildet. Die Stege 17 der Profilblockreihe 2 sind alle in der gleichen axialen Position des Fahrzeugluftreifens ausgebildet.

Die Stege 16 der Profilblockreihe 3 sind alle in der gleichen axialen Position des Fahrzeugluftreifens ausgebildet. Die Stege 17 der Profilblockreihe 3 sind alle in der gleichen axialen Position des Fahrzeugluftreifens ausgebildet.

### Bezugszeichenliste

### (Teil der Beschreibung)

- 1: Profilblockreihe
- 2: Profilblockreihe
- 3: Profilblockreihe
- 4: Profilblockreihe
- 5: Umfangsrille
- 6: Umfangsrille
- 7: Umfangsrille
- 8: Profilblockelement
- 9: Profilblockelement
- 10: Profilblockelement
- 11: Profilblockelement
- 12: Querrille
- 13: Querrille
- 14: Querrille
- 15: Querrille
- 16: Steg
- 17: Steg
- 18: Erster Abschnitt
- 19: Zweiter Abschnitt
- 20: Knickstelle
- 21: Spitze Ecke

## Patentansprüche

1. Fahrzeugluftreifen -insbesondere für Personenkraftwagen - mit Laufstreifenprofil mit radial erhabenen über den Umfang des Fahrzeugluftreifens erstreckten Profilbändern - wie z.B. Profilblockreihen oder Umfangsrippen - die in axialer Richtung jeweils durch eine über den Umfang des Fahrzeugluftreifens erstreckte Umfangsrille voneinander beabstandet sind, bei dem wenigstens eine Profilblockreihe (2,3) der in axialer Richtung A innerhalb der Bodenaufstandsbreite gemessenen Breite b aus in Umfangsrichtung U des Fahrzeugluftreifens hintereinander angeordneten und jeweils durch eine Querrille (13,14) von einander beabstandeten Profilblockelementen (9,10) ausgebildet ist, **wobei in jeder Querrille (13,14) der Profilblockreihe (2,3) innerhalb der Erstreckungsbreite b der Profilblockreihe (2,3) jeweils in den beiden axial äußerer Randbereichen der Querrille (13,14) der axialen Erstreckungslänge a mit a ≤ (b/4) - gemessen jeweils vom axialen Erstreckungsende der Profilblockreihe (2,3) - innerhalb der Bodenaufstandsbreite T_{A} ein in radialer Richtung R bis in einen radialen Abstand h₂ > 0 von der die Bodenkontaktoberfläche bildenden Mantelfläche des Laufstreifenprofiles erstreckter aus dem Rillengrund der Querrille (13,14) erhabener Steg (16,17) ausgebildet ist, der sich in Umfangsrichtung U erstreckt und die beiden durch die Querrille (13,14) von einander beabstandeten Profilblockelemente (9,10) mit einander verbindet,**
**dadurchgekennzeichnet,**
**dass der eine Steg (16) der Querrille (13,14) mit einer in Erstreckungsrichtung der Querrille (13,14) gemessenen Breite e₁ mit 1mm≤e₁≤4mm und der andere Steg (17) mit einer in Erstreckungsrichtung der Querrille (13,14) gemessenen Breite e₂ mit 1mm≤ e₂≤4mm ausgebildet ist mit e₁ < e₂, wobei die Breite jeweils in Position der radial äußeren Mantelfläche des Steges (16,17) gemessen wird.**

2. Fahrzeugluftreifen gemäß den Merkmalen von Anspruch 1,
wobei die Querrille (13,14) in axialer Richtung A durch eine Knickstelle (20) ihres Verlaufes in zwei geradlinig verlaufende Erstreckungsabschnitte (18,19) aufgeteilt ist, wobei die Knickstelle (20) zwischen den beiden Stegen (16,17) der Querrille (13,14) ausgebildet ist.

3. Fahrzeugluftreifen gemäß den Merkmalen von einem oder mehreren der vorangegangenen Ansprüche,
wobei die Breite b der Profilblockreihe (2,3) mit 20mm ≤ b ≤ 35mm ausgebildet ist.

4. Fahrzeugluftreifen gemäß den Merkmalen von einem oder mehreren der vorangegangenen Ansprüche,
wobei die Querrillen (13,14) der Profilblockreihe (2,3) jeweils längs ihrer gesamte Erstreckung mit einer senkrecht zur Erstreckungsrichtung der Querrille (13,14) gemessenen maximalen Breite d mit 1mm≤ d ≤3mm - gemessen in der die Straßenkontaktfläche bildenden Mantelfäche - ausgebildet ist.

5. Fahrzeugluftreifen gemäß den Merkmalen von einem oder mehreren der vorangegangenen Ansprüche,
wobei die Querrillen (13,14) jeweils längs ihrer Erstreckung zwischen den beiden Stegen (16,17) mit einer Tiefe t₁ mit 4mm≤ t₁≤ 8mm ausgebildet ist, wobei die Tiefe t₁ jeweils die maximale in radialer Richtung R von der die Bodenkontaktoberfläche bildenden Mantelfläche bis zum Rillengrund gemessene Erstreckung angibt.

6. Fahrzeugluftreifen gemäß den Merkmalen von einem oder mehreren der vorangegangenen Ansprüche,
wobei die Querrillen (13,14) jeweils längs ihrer Erstreckung außerhalb der beiden Stegen (16,17) mit einer Tiefe t₂ mit 6mm≤ t₂≤ 8mm ausgebildet ist, wobei die Tiefe t₂ jeweils die maximale in radialer Richtung R von der die Bodenkontaktoberfläche bildenden Mantelfläche bis zum Rillengrund gemessene Erstreckung angibt,
wobei insbesondere die Tiefe t₂ der maximalen Tiefe einer die Profilblockreihe(2,3) in axialer Richtung A bebgrenzenden Umfangsrille entspricht.

7. Fahrzeugluftreifen gemäß den Merkmalen von einem oder mehreren der vorangegangenen Ansprüche,
wobei der radiale Abstand h₂ mit 1mm≤ h₂≤3mm ausgebildet ist.

8. Fahrzeugluftreifen gemäß den Merkmalen von einem oder mehreren der vorangegangenen Ansprüche,
wobei sich der Steg (16,17) jeweils aus dem tiefsten Punkt des Rillengrundes des zwischen den beiden Stegen (16,17) ausgebildeten Rillenabschnitts gesehen in radialer Richtung R bis in eine Höhe h₁ erstreckt mit 2mm≤ h₁≤7mm.

9. Fahrzeugluftreifen gemäß den Merkmalen von einem oder mehreren der vorangegangenen Ansprüche,
wobei der eine Steg (16) der Querrille (13,14) mit einem in Erstreckungsrichtung der Querrille (13,14) gemessenen Abstand f₁ mit f₁>0mm vom innerhalb der Bodenaufstandsbreite nächstgelegenen axialen Erstreckungsende der Profilblockreihe (2,3) und der zweite Steg (17) mit einem in Erstreckungsrichtung der Querrille (13,14) gemessenen Abstand f₂ mit f₂>0mm vom innerhalb der Bodenaufstandsbreite nächstgelegenen axialen Erstreckungsende der Profilblockreihe (2,3) angeordnet ausgebildet ist.

10. Fahrzeugluftreifen gemäß den Merkmalen von **Anspruch 9,**
mit f₁ < f₂.

## Claims

1. Pneumatic vehicle tyre - in particular for passenger cars - with a tread profile with radially raised profile strips made to extend over the circumference of the pneumatic vehicle tyre - such as for example rows of profile blocks or circumferential ribs - which are respectively spaced apart from one another in the axial direction by a circumferential channel made to extend over the circumference of the pneumatic vehicle tyre, in which tyre at least one row of profile blocks (2, 3) of the width b, measured in the axial direction A within the ground contact width, is formed by profile block elements (9, 10) arranged one behind the other in the circumferential direction U of the pneumatic vehicle tyre and respectively spaced apart from one another by a transverse channel (13, 14), wherein, in every transverse channel (13, 14) of the row of profile blocks (2, 3) within the width of extent b of the row of profile blocks (2, 3) there is respectively formed in the two axially outer peripheral regions of the transverse channel (13, 14) of the axial length of extent a, where a ≤ (b/4) - measured respectively from the axial end of extent of the row of profile blocks (2, 3) - within the ground contact width T_{A} a connecting piece (16, 17), which is raised from the channel base of the transverse channel (13, 14) such that it is made to extend in the radial direction R up to a radial distance h₂ > 0 from the lateral surface of the tread rubber profile, forming the ground contact surface, and is made to extend in the circumferential direction U and connects to each other the two profile block elements (9, 10) that are spaced apart from each other by the transverse channel (13, 14), **characterized in that** the one connecting piece (16) of the transverse channel (13, 14) is formed with a width e₁, measured in the direction of extent of the transverse channel (13, 14), where 1 mm ≤ e₁ ≤ 4 mm, and the other connecting piece (17) is formed with a width e₂, measured in the direction of extent of the transverse channel (13, 14), where 1 mm ≤ e₂ ≤ 4 mm, with e₁ < e₂, the width respectively being measured in the position of the radially outer lateral surface of the connecting piece (16, 17).

2. Pneumatic vehicle tyre according to the features of Claim 1, the transverse channel (13, 14) being divided in the axial direction A by a point of inflection (20) of its path into two straight-running portions of extent (18, 19), the point of inflection (20) being formed between the two connecting pieces (16, 17) of the transverse channel (13, 14).

3. Pneumatic vehicle tyre according to the features of one or more of the preceding claims, the width b of the row of profile blocks (2, 3) being formed with 20 mm ≤ b ≤ 35 mm.

4. Pneumatic vehicle tyre according to the features of one or more of the preceding claims, the transverse channels (13, 14) of the row of profile blocks (2, 3) being formed respectively along their entire extent with a maximum width d, measured perpendicularly to the direction of extent of the transverse channel (13, 14), where 1 mm ≤ d ≤ 3 mm - measured in the lateral surface forming the road contact area.

5. Pneumatic vehicle tyre according to the features of one or more of the preceding claims, the transverse channels (13, 14) being respectively formed along their extent between the two connecting pieces (16, 17) with a depth t₁ where 4 mm ≤ t₁ ≤ 8 mm, the depth t₁ respectively indicating the maximum extent measured in the radial direction R from the lateral surface forming the ground contact surface to the channel base.

6. Pneumatic vehicle tyre according to the features of one or more of the preceding claims, the transverse channels (13, 14) being respectively formed along their extent outside the two connecting pieces (16, 17) with a depth t₂ where 6 mm ≤ t₂ ≤ 8 mm, the depth t₂ respectively indicating the maximum extent measured in the radial direction R from the lateral surface forming the ground contact surface to the channel base, in particular the depth t₂ corresponding to the maximum depth of a circumferential channel delimiting the row of profile blocks (2, 3) in the axial direction A.

7. Pneumatic vehicle tyre according to the features of one or more of the preceding claims, the radial distance h₂ being formed with 1 mm ≤ h₂ ≤ 3 mm.

8. Pneumatic vehicle tyre according to the features of one or more of the preceding claims, the connecting piece (16, 17) being respectively made to extend from the lowest point of the channel base of the channel portion formed between the two connecting pieces (16, 17) as seen in the radial direction R to a height h₁, where 2 mm ≤ h₁ ≤ 7 mm.

9. Pneumatic vehicle tyre according to the features of one or more of the preceding claims, the one connecting piece (16) of the transverse channel (13, 14) being formed such that it is arranged at a distance f₁, measured in the direction of extent of the transverse channel (13, 14), where f₁ > 0 mm, from the end of extent of the row of profile blocks (2, 3) that is next-closest within the ground contact width and the second connecting piece (17) being formed such that it is arranged at a distance f₂, measured in the direction of extent of the transverse channel (13, 14), where f₂ > 0 mm, from the end of extent of the row of profile blocks (2, 3) that is next-closest within the ground contact width.

10. Pneumatic vehicle tyre according to the features of Claim 9, where f₁ < f₂.

## Revendications

1. Bandage pneumatique pour roue de véhicule, en particulier pour voiture automobile,
présentant un profil de bande de roulement doté de bandes profilées, par exemple des rangées de blocs profilés ou des nervures périphériques, qui sont rehaussées radialement au-delà de la périphérie du bandage pour roue de véhicule et séparées les unes des autres dans la direction axiale par une rainure périphérique qui s'étend autour de la périphérie du bandage pneumatique pour roue de véhicule,
au moins une rangée (2, 3) de blocs profilés dont la largeur mesurée dans la direction axiale A à l'intérieur de la largeur d'appui au sol vaut b, disposés les uns derrière les autres dans la direction périphérique U du bandage pneumatique pour roue de véhicule étant formée d'éléments (9, 10) de blocs profilés séparés les uns des autres par une rainure transversale (13, 14),
une nervure (16, 17) rehaussée par rapport au fond de la rainure transversale (13, 14), s'étendant dans la direction radiale R jusqu'à une distance radiale h₂ > 0 de la surface d'enveloppe qui forme la surface de contact avec le sol du profil de bande de roulement étant formée dans chaque rainure transversale (13, 14) de la rangée (2, 3) de blocs profilés à l'intérieur de la largeur b d'extension de la rangée (2, 3) de blocs profilés, dans chacune des deux bordures radialement extérieures de la rainure transversale (13, 14) d'extension axiale a, avec a ≤ (b/4), mesurée depuis l'extrémité axiale de l'extension de la rangée (2, 3) de blocs profilés à l'intérieur de la largeur T_{A} d'appui au sol,
la nervure s'étendant dans la direction périphérique U et reliant l'un à l'autre les deux éléments (9, 10) de blocs profilés séparés l'un de l'autre par la rainure transversale (13, 14), **caractérisé en ce que**
dans la direction d'extension de la rainure transversale (13, 14), la nervure (16) de la rainure transversale (13, 14) présente une largeur e₁, avec 1 mm ≤ e₁ ≤ 4 mm, l'autre nervure (17) présentant dans la direction d'extension de la rainure transversale (13, 14) une largeur e₂, avec 1 mm ≤ e₂ ≤ 4 mm et e₁ < e₂, la largeur étant chaque fois mesurée dans la position de la surface d'enveloppe radialement extérieure de la nervure (16, 17).

2. Bandage pneumatique pour roue de véhicule selon les caractéristiques de la revendication 1, dans lequel en un emplacement coudé (20) de son extension, la rainure transversale (13, 14) est divisée dans la direction axiale A en deux parties d'extension (18, 19) qui s'étendent en ligne droite, l'emplacement coudé (20) étant formé entre les deux nervures (16, 17) de la rainure transversale (13, 14).

3. Bandage pneumatique pour roue de véhicule selon les caractéristiques d'une ou plusieurs des revendications précédentes, dans lequel la largeur b de la rangée (2, 3) de blocs profilés vérifie la relation 20 mm ≤ b ≤ 35 mm.

4. Bandage pneumatique pour roue de véhicule selon les caractéristiques d'une ou plusieurs des revendications précédentes, dans lequel les rainures transversales (13, 14) de la rangée (2, 3) de blocs profilés présentent sur la totalité de leur extension une largeur maximale d, mesurée perpendiculairement à la direction d'extension de la rainure transversale (13, 14), avec 1 mm ≤ d ≤ 3 mm, d étant mesuré dans la surface d'enveloppe qui forme la surface de contact avec la chaussée.

5. Bandage pneumatique pour roue de véhicule selon les caractéristiques d'une ou plusieurs des revendications précédentes, dans lequel dans leur extension entre les deux nervures (16, 17), les rainures transversales (13, 14) présentent une profondeur t₁, avec 4 mm ≤ t₁ ≤ 8 mm, la profondeur t₁ représentant chaque fois l'extension maximale, mesurée jusqu'au fond de la rainure dans la direction radiale R, depuis la surface d'enveloppe qui forme la surface de contact avec le sol.

6. Bandage pneumatique pour roue de véhicule selon les caractéristiques d'une ou plusieurs des revendications précédentes, dans lequel dans leur extension à l'extérieur des deux nervures (16, 17), les rainures transversales (13, 14) présentent une profondeur t₂, avec 6 mm ≤ t₂ ≤ 8 mm, la profondeur t₂ représentant chaque fois l'extension, mesurée jusqu'au fond de la rainure dans la direction radiale R depuis la surface d'enveloppe qui forme la surface de contact avec le sol, la profondeur t₂ correspondant en particulier à la profondeur maximale d'une rainure périphérique qui délimite la rangée (2, 3) de blocs profilés dans la direction axiale A.

7. Bandage pneumatique pour roue de véhicule selon les caractéristiques d'une ou plusieurs des revendications précédentes, dans lequel la distance radiale h₂ vérifie la relation 1 mm ≤ h₂ ≤ 3 mm.

8. Bandage pneumatique pour roue de véhicule selon les caractéristiques d'une ou plusieurs des revendications précédentes, dans lequel chaque nervure (16, 17) s'étend depuis le point le plus profond du fond de la partie de rainure formée entre les deux nervures (16, 17) à une hauteur h₁ dans la direction radiale R, avec 2 mm ≤ h₁ ≤ 7 mm.

9. Bandage pneumatique pour roue de véhicule selon les caractéristiques d'une ou plusieurs des revendications précédentes, dans lequel dans la direction de l'extension de la rainure transversale (13, 14), une nervure (16) de la rainure transversale (13, 14) présente une distance f₁, avec f₁ > 0 mm, depuis l'extrémité axiale la plus proche de la largeur d'appui au sol, de la rangée (2, 3) de blocs profilés et dans la direction d'extension de la rainure transversale (13, 14), la deuxième nervure (17) présente une distance f₂, f₂ > 0 mm, depuis l'extrémité axiale la plus proche à l'intérieur de la largeur d'appui au sol de la rangée (2, 3) de blocs profilés.

10. Bandage pneumatique pour roue de véhicule selon les caractéristiques de la revendication 9, dans lequel f₁ < f₂.
